# EUROPÄISCHE PATENTSCHRIFT

(11) **EP 2 467 256 B1**
(45) Veröffentlichungstag und Bekanntmachung des Hinweises auf die Patenterteilung: **30.10.2013**
(21) Anmeldenummer: 10730158.2
(22) Anmeldetag: 02.07.2010
(51) Int. Cl.: B32B 7/12, B23K 26/00, B29C 45/14, B29C 65/00, B29C 70/68

(54) **BAUTEILVERBUND SOWIE VERFAHREN ZUM HERSTELLEN EINES BAUTEILVERBUNDES**
COMPONENT COMPOSITE AND METHOD FOR MANUFACTURING A COMPONENT COMPOSITE
ÉLÉMENT COMPOSITE AINSI QUE PROCÉDÉ DE FABRICATION D'UN ÉLÉMENT COMPOSITE

(30) Priorität: 17.08.2009 DE 102009028583
(43) Veröffentlichungstag der Anmeldung: 27.06.2012
(73) Patentinhaber: Robert Bosch GmbH, 70442 Stuttgart (DE)
(72) Erfinder: MAIER, Martin, 71696 Moeglingen (DE); GARNIER, Kai, 73779 Deizisau (DE); AICHELE, Wilfried, 71364 Winnenden (DE); HAUTMANN, Nikolaus, 71254 Ditzingen (DE); HONER, Michael, 70839 Gerlingen (DE); LANDER, Juergen, 70563 Stuttgart (DE); KOENIG, Jens, 71706 Markgroeningen (DE)
(86) Internationale Anmeldenummer: PCT/EP2010/059432
(87) Internationale Veröffentlichungsnummer: WO 2011/020640

(56) Entgegenhaltungen:
- DE-A1-102004 034 824
- DE-A1-102006 015 520
- DE-C1- 19 523 900
- US-A1- 2008 070 001
- US-A1- 2008 206 520
- TSUKAMOTO M ET AL: "Periodic microstructures produced by femtosecond laser irradiation on titanium plate" VACUUM, PERGAMON PRESS, GB, Bd. 80, Nr. 11-12, 7. September 2006 (2006-09-07), Seiten 1346-1350, XP025009629 ISSN: 0042-207X [gefunden am 2006-09-07]
- SPADARO ET AL: "Laser surface treatments for adhesion improvement of aluminium alloys structural joints" RADIATION PHYSICS AND CHEMISTRY, ELSEVIER SCIENCE PUBLISHERS BV., AMSTERDAM, NL, Bd. 76, Nr. 8-9, 24. Mai 2007 (2007-05-24) , Seiten 1441-1446, XP022094667 ISSN: 0969-806X
- GENDLER ET AL: "Improvement of adhesive bonding strength in sealed anodized aluminium through excimer laser prebond treatment" JOURNAL OF MATERIALS SCIENCE, Bd. 29, 15. März 1994 (1994-03-15), Seiten 1521-1526, XP002550540

## Beschreibung

### Stand der Technik

Die Erfindung betrifft einen Bauteilverbund gemäß dem Oberbegriff des Anspruchs 1 sowie ein Verfahren zum Herstellen eines Bauteilverbundes gemäß dem Oberbegriff des Anspruchs 9.

Ein derartiger Bauteilverbund ist aus der DE 195 23 900 C1 der Anmelderin bekannt. Der bekannte Bauteilverbund umfasst zwei Bauteile, die mittels einer zwischen zwei Kontaktoberflächen der Bauteile angeordneten Klebeschicht miteinander verbunden werden. Zur Erhöhung der Festigkeit und Dichtheit der Klebeverbindung wird an einer Kontaktoberfläche des ersten Bauteils eine von einer Nanostruktur überlagerte Mikrostruktur erzeugt.

Weiterhin ist es aus der nachveröffentlichten DE 10 2008 040782 A1 der Anmelderin bekannt, mittels eines Lasers an einer ersten Kontaktoberfläche eines ersten Bauteils eine von einer Nanostruktur überlagerte Mikrostruktur zu erzeugen. Anschließend wird das erste Bauteil von einem zweiten Bauteil mit einer zweiten Kontaktoberfläche umspritzt, wobei durch die Oberflächenstruktur am ersten Bauteil eine dichte Verbindung zwischen den beiden Kontaktoberflächen der Bauteile erzeugt wird. Eine Klebeverbindung ist jedoch nicht vorgesehen.

Bekannt ist außerdem das Umspritzen von Metallteilen mit Kunststoff, wobei an den Metallteilen makroskopische Strukturen mit Hinterschneidungen, wie beispielsweise Rippen oder einer Waffelstruktur, vorgesehen sind, um einen Formschluss mit dem Kunststoffmaterial zu ermöglichen. Obwohl die zum Einsatz kommenden thermoplastischen Kunststoffe nicht an dem Metall haften, kann bei geschickter Ausnutzung von Schwindungsspannungen anfänglich eine Gasdichtigkeit des Bauteilverbundes erreicht werden. Diese Gasdichtigkeit ist jedoch insbesondere bei Temperatur- und/oder Lastwechsel oder bei Medieneinfluss temporär.

Aus Patentschriften der Firma TaiseiPlas ist ferner bekannt, die Oberfläche von Metallteilen chemisch zu strukturieren und im Anschluss ein Kunststoffbauteil im Spritzgussverfahren an die derart strukturierte Oberfläche anzuspritzen.

Aus der DE 10 2004 034 824 B4 ist eine metallische Flachdichtung mit mindestens einer metallischen Dichtungslage bekannt. Die metallische Dichtungslage ist dabei mit einer mittels Laserstrahlung erzeugten Oberflächenstruktur versehen, auf die elastomeres Material aufgebracht wird.

Ferner ist es weiterhin bekannt, Bauteile mit einem Klebstoff, gegebenenfalls unter Zwischenlage eines Haftvermittlers miteinander zu verbinden, um die Anbindung des Klebstoffes an der Oberfläche zu verbessern.

### Offenbarung der Erfindung

Ausgehend von dem dargestellten Stand der Technik liegt der Erfindung die Aufgabe zugrunde, einen Bauteilverbund herzustellen, der sich durch eine besondere hohe Festigkeit und Dichtigkeit, insbesondere auch nach Temperatur- und Lastwechseln bzw. nach Medienlagerung auszeichnet, wie sie insbesondere bei Bauteilverbunden in Kraftfahrzeugen im Motorraum auftreten. Bevorzugt soll der Bauteilverbund zuverlässig und dauerhaft gasdicht sein. Ferner besteht die Aufgabe darin, ein Verfahren zum Herstellen eines entsprechend optimierten Bauteilverbundes vorzuschlagen.

Diese Aufgabe wird hinsichtlich des Bauteilverbundes mit den Merkmalen des Anspruchs 1 und hinsichtlich des Herstellungsverfahrens mit den Merkmalen des Anspruchs 9 gelöst. Vorteilhafte Weiterbildungen der Erfindung sind in den Unteransprüchen angegeben.

Der Erfindung liegt der Gedanke zugrunde, durch Ausbildung einer zusätzlichen formschlüssigen Verbindung durch zumindest teilweises Umspritzen des ersten Bauteils durch das zweite Bauteil über die formschlüssige Verbindung besonders hohe Kräfte zwischen den Bauteilen übertragen zu können.

In einer ganz besonders bevorzugten Weiterbildung der Erfindung ist es vorgesehen, dass auch die zweite Kontaktoberfläche an dem zweiten Bauteil eine Oberflächenstruktur mit einer von einer Nanostruktur überlagerten Mikrostruktur aufweist. Dadurch lassen sich besonders feste und dichte Verbindungen zwischen den beiden Bauteilen ausbilden.

Die Ausbildung der Oberflächenstrukturen kann dabei alternativ mittels einer elektromagnetischen Strahlung, mittels elektrischer Strukturierung oder mittels einer mechanischen Strukturierung erfolgen, so dass je nach Anwendungsfall die Ausbildung der Oberflächenstruktur optimiert werden kann.

In einer Weiterbildung der Erfindung ist mit Vorteil vorgesehen, dass Mikrostrukturelemente der Mikrostruktur einen Durchmesser aus einem Größenbereich zwischen etwa 1µm und etwa 999µm aufweisen. Besonders bevorzugt weisen die Nanostrukturelemente der Nanostruktur zusätzlich oder alternativ einen Durchmesser aus einem Größenbereich zwischen etwa 1 nm und etwa 999nm auf.

Besonders bevorzugt wird als elektromagnetische Strahlung zur Erzeugung der Oberflächenstruktur Laserstrahlung eingesetzt. Ganz besonders bevorzugt kommt hierzu ein Ultrakurzpulslaser zum Einsatz, wobei es weiter bevorzugt ist, wenn die Oberflächenstruktur unter Einfluss von einem Prozessmedium zur Erhöhung der Effizienz und/oder zur Passivierung erzeugt wird. Mit Vorteil wird dabei Prozessgas, insbesondere Inertgas eingesetzt. Ganz besonders bevorzugt handelt es sich bei dem Prozessgas um Helium, das die Bildung einer Oxidschicht auf dem ersten, vorzugsweise aus Stahl oder Aluminium bestehenden Bauteil verhindert.

In Weiterbildung der Erfindung ist mit Vorteil vorgesehen, dass die Strahlungswellenlänge der eingesetzten elektromagnetischen Strahlung, insbesondere der Laserstrahlung, aus einem Wertebereich zwischen etwa 10nm und etwa 11 µm gewählt ist. Ganz besonders bevorzugt ist die Wellenlänge aus einem Wellenlängenbereich zwischen etwa 100nm und etwa 1500nm gewählt. Zusätzlich oder alternativ ist bevorzugt, die Strahlungspulsdauer, insbesondere die Laserstrahlpulsdauer, aus einem Wertebereich zwischen etwa 10fs bis etwa 10µs, besonders bevorzugt zwischen etwa 100fs und etwa 100ps zu wählen. Durch die Wahl entsprechender Strahlungsparameter kann die gewünschte Oberflächenstruktur mit einer von einer Nanostruktur überlagerten Mikrostruktur geschaffen werden.

Besonders bevorzugt ist eine Ausführungsform, bei der das erste und das zweite Bauteil, zumindest näherungsweise, gleiche thermische Ausdehnungskoeffizienten aufweisen, um eine Dichtheit noch zuverlässiger bei Temperaturschwankungen gewährleisten zu können.

Besonders bevorzugt ist der Bauteilverbund Bestandteil eines Kraftstoffeinspritzventils, oder eines Gehäusedeckels, insbesondere für ein Steuergerät, oder eines Sensors.

Ganz besonders bevorzugt ist es, wenn die Oberflächenstrukturierung, welche entweder nur am ersten Bauteil, besonders bevorzugt jedoch an den Kontaktoberflächen an beiden Bauteilen ausgebildet ist, mit Hilfe elektromagnetischer Strahlung, vorzugsweise unter Einfluss eines Prozessmediums, insbesondere unter Prozessgasatmosphäre erfolgt, um die Bauteiloberfläche chemisch zu verändern, beispielsweise zu passivieren und die Strukturierungseffizienz zu erhöhen.

In Weiterbildung der Erfindung ist mit Vorteil vorgesehen, dass zum Erzeugen der Oberflächenstruktur ein Ultrakurzpulslaser eingesetzt wird.

Diese zeigen in:
- Fig. 1:: in einer perspektivischen Ansicht ein erstes Bauteil mit einer Oberflächenstruktur,
- Fig. 2:: ein vergrößertes, die Oberflächenstruktur schematisch darstellendes Detail aus Fig. 1 und
- Fig. 3:: einen Bauteilverbund, in einer geschnittenen Seitenansicht, umfassend das in Fig. 1 gezeigte erste Bauteil sowie ein zweites Bauteil mit zwischen den beiden Bauteilen angeordneter Klebstoffschicht.

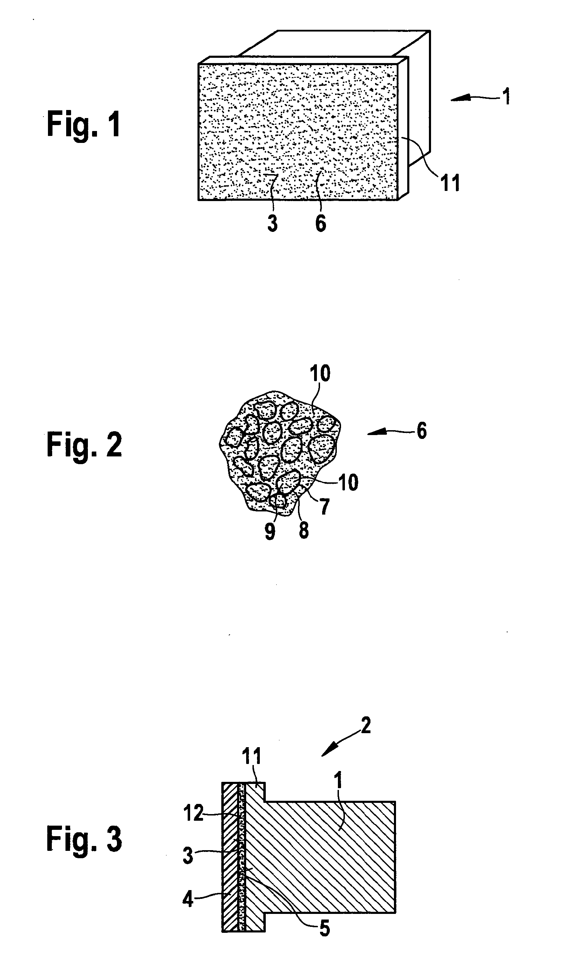

In Fig. 1 ist ein erstes Bauteil 1 als Bestandteil eines in Fig. 3 gezeigten Bauteilverbundes 2 gezeigt.

Das erste Bauteil 1 ist in dem gezeigten Ausführungsbeispiel aus Metall ausgebildet und umfasst eine erste Kontaktoberfläche 3, mit der das erste Bauteil 1 in dem in der Fig. 3 gezeigten Bauteilverbund 2 unter Zwischenlage einer Klebstoffschicht 12 mit einem zweiten Bauteil 4, das eine zweite Kontaktoberfläche 5 aufweist, verbunden ist.

Das erste Bauteil 1, genauer die erste Kontaktoberfläche 3, ist mit einer Oberflächenstruktur 6 versehen. Diese ist schematisch in Fig. 2 in einer vergrößerten Darstellung gezeigt. Wie sich aus Fig. 1 ergibt, ist die erste Kontaktfläche 3 vollflächig mit der Oberflächenstruktur 6 versehen. Die in Fig. 2 gezeigte Oberflächenstruktur 6 umfasst eine Mikrostruktur 7 mit wulstigen und/oder vertieften Mikrostrukturelementen 8. Die Mikrostrukturelemente 8 sind mit Nanostrukturelementen 9 und einer Nanostruktur 10 versehen, die sich auch im Bereich außerhalb der Mikrostrukturelemente 8 befindet. Durch die nano-/mikro-strukturierte Bauteiloberfläche (erste Kontaktoberfläche 3) wirken zwischen dem ersten Bauteil 1 und der Klebstoffschicht 12 in dem in der Fig. 3 gezeigten Bauteilverbund 2 besonders hohe Haftkräfte.

Zum Herstellen der Oberflächenstruktur 6 wird zunächst die unstrukturierte erste Kontaktfläche 3 mittels eines gepulsten Laserstrahls bestrahlt. Dabei wird der Laserstrahl mittels eines Scannersystems derart abgelenkt, dass er den zu strukturierenden Bereich des ersten Bauteils 1 abrastert. Zum Erzeugen der gewünschten Oberflächenstruktur kann dabei ein Femto-, Piko-, oder Nanosekunden-Laser, vorzugsweise mit einer hohen Pulsfolgefrequenz, eingesetzt werden. Der Strukturierungsprozess zur Herstellung der in Fig. 2 gezeigten Oberflächenstruktur 6 erfolgt bevorzugt unter Prozessgas, um die Ausbildung einer Oxidschicht auf dem vorzugsweise aus Aluminium oder Stahl ausgebildeten ersten Bauteil 1 zu beeinflussen. Bevorzugt beträgt der Vorschub, mit der sich der Laserstrahl relativ zu dem ersten Bauteil 1 auf der ersten Kontaktoberfläche 3 bewegt, zwischen 100mm/s und 10.000mm/s.

Zur Herstellung des in Fig. 3 gezeigten Bauteilverbundes 2 wird das erste Bauteil 1, genauer die erste Kontaktoberfläche 3 mit ihrer Oberflächenstruktur 6, mit dem zweiten Bauteil 4 unter Zwischenlage der Klebstoffschicht 12 verbunden. Das zweite Bauteil 4 ist dabei aus Kunststoff, insbesondere thermoplastischem oder duroplastischem Kunststoff ausgebildet. Insbesondere kann es vorgesehen sein, dass auch die zweite Kontaktoberfläche 5 des zweiten Bauteils 4 mit einer Oberflächenstruktur 6 entsprechend der ersten Kontaktoberfläche 3 am ersten Bauteil 1 ausgestattet ist.

Das erste Bauteil 1 ist vom zweiten Bauteil 4 zumindest teilweise umspritzt. Der Formschluss zwischen den beiden Bauteilen 1, 4 wird dann dadurch gewährleistet, dass das zweite Bauteil 4 einen Umfangsbund 11 des ersten Bauteils 1 umgreift. Alternativ können am ersten Bauteil 1 beispielsweise von dem zweiten Bauteil 4 umspritzte Laschen, etc. vorgesehen werden. Besonders bevorzugt besteht das zweite Bauteil 4 dann aus glasfaser- und/oder mineralverstärkten Kunststoffen, bevorzugt thermoplastischen Kunststoffen oder Duroplasten.

Es sind verschiedene Abwandlungen von dem beschriebenen Ausführungsbeispiel denkbar. So ist es beispielsweise möglich, dass die erste Kontaktoberfläche 3 nur teilweise mit einer Oberflächenstruktur 6 versehen wird. Auch kann die Oberflächenstruktur 6 nicht nur mittels einer elektromagnetischen Strahlung, sondern alternativ auch durch eine elektrische Strukturierung oder durch eine mechanische Strukturierung erzeugt werden.

Weitere Einsatzgebiete neben dem Einsatz in der Kraftfahrzeugtechnik sind alle Bauteile, die eine kraftschlüssige, dichte Verbindung mit einem Klebstoff erfordern.

## Patentansprüche

1. Bauteilverbund (2), insbesondere für Kraftfahrzeuganwendungen, umfassend ein erstes Bauteil (1) mit einer ersten Kontaktoberfläche (3), wobei die erste Kontaktoberfläche (3) eine Oberflächenstruktur (6) mit einer von einer Nanostruktur (10) überlagerten Mikrostruktur (7) aufweist und mit mindestens einem zweiten Bauteil (4) mit einer zweiten Kontaktoberfläche (5), wobei zwischen den beiden Kontaktoberflächen (3, 5) der beiden Bauteile (1, 4) ein Medium, insbesondere eine Klebstoffschicht (12) zur stoffschlüssigen Verbindung angeordnet ist,
**dadurch gekennzeichnet,**
**dass** die zweite Kontaktoberfläche (5), vorzugsweise das gesamte zweite Bauteil (4), aus Kunststoff, insbesondere einem thermoplastischen Kunststoff ausgebildet ist, und dass das erste Bauteil (1), zumindest abschnittsweise, von dem zweiten Bauteil (4) umspritzt ist.

2. Bauteilverbund nach Anspruch 1,
**dadurch gekennzeichnet,**
**dass** auch die zweite Kontaktoberfläche (5) an dem zweiten Bauteil (4) eine Oberflächenstruktur (6) mit einer von einer Nanostruktur (10) überlagerten Mikrostruktur (7) aufweist.

3. Bauteilverbund nach Anspruch 1 oder 2,
**dadurch gekennzeichnet,**
**dass** die Oberflächenstruktur (6) mittels einer elektromagnetischen Strahlung, mittels einer elektrischen Strukturierung oder mittels einer mechanischen Strukturierung erzeugt ist.

4. Bauteilverbund nach einem der Ansprüche 1 bis 3,
**dadurch gekennzeichnet,**
**dass** die Mikrostruktur (7) Mikrostrukturelemente (8) mit einem Durchmesser aus einem Größenbereich zwischen 1µm bis 999µm und/oder die Nanostruktur (10) Nanostrukturelemente (9) mit einem Durchmesser aus einem Größenbereich zwischen 1 nm und 999nm aufweist.

5. Bauteilverbund nach einem der vorhergehenden Ansprüche,
**dadurch gekennzeichnet,**
**dass** die erste Kontaktoberfläche (3) aus Metall ausgebildet ist.

6. Bauteilverbund nach einem der vorhergehenden Ansprüche,
**dadurch gekennzeichnet,**
**dass** das erste und das zweite Bauteil (1, 4) zumindest näherungsweise gleiche thermische Ausdehnungskoeffizienten aufweisen.

7. Bauteilverbund nach einem der vorhergehenden Ansprüche,
**dadurch gekennzeichnet,**
**dass** die erste Kontaktoberfläche (3) bzw. die zweite Kontaktoberfläche (5) vollflächig mit der Oberflächenstruktur (6) versehen ist.

8. Bauteilverbund nach einem der vorhergehenden Ansprüche,
**dadurch gekennzeichnet,**
**dass** der Bauteilverbund (2) Bestandteil eines Kraftstoffeinspritzventils, oder eines Gehäusedeckels, insbesondere für ein Steuergerät, oder eines Sensors ist.

9. Verfahren zum Herstellen eines Bauteilverbundes (2), umfassend ein erstes Bauteil (1) mit einer ersten Kontaktoberfläche (3), wobei die erste Kontaktoberfläche (3) mit einer Oberflächenstruktur (6) versehen wird, die eine von einer Nanostruktur (10) überlagerte Mikrostruktur (7) aufweist und mit mindestens einem zweiten Bauteil (4) mit einer zweiten Kontaktoberfläche (5), wobei zwischen den beiden Kontaktoberflächen (3, 5) ein Medium, insbesondere eine Klebstoffschicht (12) zur stoffschlüssigen Verbindung der beiden Kontaktoberflächen (3, 5) aufgebracht wird,
**dadurch gekennzeichnet, dass**
das erste Bauteil (1) mit dem zweiten Bauteil (4) formschlüssig verbunden wird, vorzugsweise durch zumindest abschnittsweises Umspritzen des ersten Bauteils (1) mit dem zweiten Bauteil (4), welches besonders bevorzugt, zumindest abschnittsweise, aus Kunststoffmaterial ausgebildet wird.

10. Verfahren nach Anspruch 9,
**dadurch gekennzeichnet,**
**dass** die Oberflächenstrukturierung an der ersten Kontaktoberfläche (3) oder an beiden Kontaktoberflächen (3, 5) mittels elektromagnetischer Strahlung erzeugt wird, und dass die Oberflächenstrukturierung unter einem Prozessmedium, insbesondere unter einer Prozessgasathmosphäre, vorzugsweise zur Passivierung und/oder Effizienzerhöhung, erfolgt.

11. Verfahren nach Anspruch 9 oder 10,
**dadurch gekennzeichnet,**
**dass** die Oberflächenstruktur (6) mittels eines Lasers mit einer Pulsdauer zwischen 100fs und 100ps, vorzugsweise unter einer Prozessmediumumgebung, bevorzugt unter einer Prozessgasatmosphäre, erzeugt wird.

12. Verfahren nach einem der Ansprüche 9 bis 11,
**dadurch gekennzeichnet,**
**dass** die Oberflächenstruktur (6) mit einer Strahlungswellenlänge aus einem Bereich zwischen 10nm und 11µm, besonders bevorzugt zwischen 100nm und 1500nm, und/oder mit einer Strahlungspulsdauer aus einem Bereich zwischen 100fs und 10µs, besonders bevorzugt zwischen 10fs und 100ps, erzeugt wird.

## Claims

1. Component composite (2), in particular for motor vehicle applications, comprising a first component (1) with a first contact surface (3), the first contact surface (3) having a surface structure (6) with a microstructure (7) overlaid by a nanostructure (10), and comprising at least one second component (4) with a second contact surface (5), there being arranged between the two contact surfaces (3, 5) of the two components (1, 4) a medium, in particular an adhesive layer (12), for establishing a material-bonding connection, **characterized in that** the second contact surface (5), preferably the entire second component (4), is formed from plastic, in particular a thermoplastic, and **in that** the first component (1) is encapsulated, at least in certain portions, in the second component (4).

2. Component composite according to Claim 1, **characterized in that** the second contact surface (5) on the second component (4) also has a surface structure (6) with a microstructure (7) overlaid by a nanostructure (10).

3. Component composite according to Claim 1 or 2, **characterized in that** the surface structure (6) is created by means of an electromagnetic radiation, by means of an electrical structuring or by means of a mechanical structuring.

4. Component composite according to one of Claims 1 to 3, **characterized in that** the microstructure (7) has microstructure elements (8) with a diameter from a size range of between 1 µm and 999 µm and/or the nanostructure (10) has nanostructure elements (9) with a diameter from a size range of between 1 nm and 999 nm.

5. Component composite according to one of the preceding claims, **characterized in that** the first contact surface (3) is formed from metal.

6. Component composite according to one of the preceding claims, **characterized in that** the first and second components (1, 4) have at least approximately the same coefficient of thermal expansion.

7. Component composite according to one of the preceding claims, **characterized in that** the first contact surface (3) and the second contact surface (5) are provided with the surface structure (6) over their full surface area.

8. Component composite according to one of the preceding claims, **characterized in that** the component composite (2) is a constituent part of a fuel injection valve, or of a housing cover, in particular for a control device, or of a sensor.

9. Method for manufacturing a component composite (2), comprising a first component (1) with a first contact surface (3), the first contact surface (3) being provided with a surface structure (6) which has a microstructure (7) overlaid by a nanostructure (10), and comprising at least one second component (4) with a second contact surface (5), there being applied between the two contact surfaces (3, 5) a medium, in particular an adhesive layer (12), for establishing a material-bonding connection between the two contact surfaces (3, 5), **characterized in that** the first component (1) is connected to the second component (4) in a positively locking manner, preferably by encapsulating the first component (1), at least in certain portions, in the second component (4), which with particular preference is formed, at least in certain portions, from plastics material.

10. Method according to Claim 9, **characterized in that** the surface structuring on the first contact surface (3) or on both contact surfaces (3, 5) is created by means of electromagnetic radiation, and **in that** the surface structuring takes place under a process medium, in particular under a process gas atmosphere, preferably for passivation and/or increasing efficiency.

11. Method according to Claim 9 or 10, **characterized in that** the surface structure (6) is created by means of a laser with a pulse duration of between 100 fs and 100 ps, preferably in a process medium environment, with preference under a process gas atmosphere.

12. Method according to one of Claims 9 to 11, **characterized in that** the surface structure (6) is created with a radiation wavelength from a range of between 10 nm and 11 µm, with particular preference of between 100 nm and 1500 nm, and/or with a radiation pulse duration from a range of between 100 fs and 10 µs, with particular preference of between 10 fs and 100 ps.

## Revendications

1. Elément composite (2), en particulier pour des applications en construction automobile, comprenant un premier composant (1) avec une première surface de contact (3), dans lequel la première surface de contact (3) présente une structure de surface (6) avec une microstructure (7) à laquelle est superposée une nanostructure (10) et avec au moins un deuxième composant (4) avec une deuxième surface de contact (5), dans lequel un agent, en particulier une couche de colle (12) pour la liaison matérielle, est disposée entre les deux surfaces de contact (3, 5) des deux composants (1, 4), **caractérisé en ce que** la deuxième surface de contact (5), de préférence la totalité du deuxième composant (4), est formée de matière plastique, en particulier d'une matière plastique thermoplastique, et **en ce que** le premier composant (1), est enrobé par projection, au moins localement, par le deuxième composant (4).

2. Elément composite selon la revendication 1, **caractérisé en ce que** la deuxième surface de contact (5) sur le deuxième composant (4) présente également une structure de surface (6) avec une microstructure (7) à laquelle est superposée une nanostructure (10).

3. Elément composite selon la revendication 1 ou 2, **caractérisé en ce que** la structure de surface (6) est produite au moyen d'un rayonnement électromagnétique, au moyen d'une structuration électrique ou au moyen d'une structuration mécanique.

4. Elément composite selon l'une quelconque des revendications 1 à 3, **caractérisé en ce que** la microstructure (7) présente des éléments de microstructure (8) avec un diamètre situé dans une plage comprise entre 1 µm et 999 µm et/ou la nanostructure (10) présente des éléments de nanostructure (9) avec un diamètre situé dans une plage comprise entre 1 nm et 999 nm.

5. Elément composite selon l'une quelconque des revendications précédentes, **caractérisé en ce que** la première surface de contact (3) est réalisée en métal.

6. Elément composite selon l'une quelconque des revendications précédentes, **caractérisé en ce que** le premier et le deuxième composants (1, 4) présentent au moins approximativement les mêmes coefficients de dilatation thermique.

7. Elément composite selon l'une quelconque des revendications précédentes, **caractérisé en ce que** la première surface de contact (3) ou la deuxième surface de contact (5) est dotée de la structure de surface (6) sur toute la surface.

8. Elément composite selon l'une quelconque des revendications précédentes, **caractérisé en ce que** l'élément composite (2) fait partie d'un injecteur de carburant, ou d'un couvercle de boîtier, en particulier pour un appareil de commande, ou d'un capteur.

9. Procédé de fabrication d'un élément composite (2), comprenant un premier composant (1) avec une première surface de contact (3), dans lequel la première surface de contact (3) est dotée d'une structure de surface (6) qui présente une microstructure (7) à laquelle est superposée une nanostructure (10) et avec au moins un deuxième composant (4) avec une deuxième surface de contact (5), dans lequel on applique un agent, en particulier une couche de colle (12) entre les deux surfaces de contact (3, 5) pour la liaison matérielle des deux surfaces de contact (3, 5), **caractérisé en ce que** l'on assemble par emboîtement le premier composant (1) avec le deuxième composant (4), de préférence en enrobant au moins localement le premier composant (1) par projection avec le deuxième composant (4), qui est de préférence encore constitué au moins localement de matière plastique.

10. Procédé selon la revendication 9, **caractérisé en ce que** l'on produit la structuration de surface sur la première surface de contact (3) ou sur les deux surfaces de contact (3, 5) au moyen d'un rayonnement électromagnétique, et **en ce que** la structuration de surface est effectuée sous un agent de traitement, en particulier sous une atmosphère de gaz de traitement, de préférence pour la passivation et/ou l'augmentation de l'efficacité.

11. Procédé selon la revendication 9 ou 10, **caractérisé en ce que** l'on produit la structure de surface (6) au moyen d'un laser avec une durée d'impulsion comprise entre 100 fs et 100 ps, de préférence sous une atmosphère d'agent de traitement, de préférence sous une atmosphère de gaz de traitement.

12. Procédé selon l'une quelconque des revendications 9 à 11, **caractérisé en ce que** l'on produit la structure de surface (6) avec une longueur d'onde de rayonnement située dans une plage comprise entre 10 nm et 11 µm, de préférence encore entre 100 nm et 1500 nm, et/ou avec une durée d'impulsion de rayonnement située dans une plage comprise entre 100 fs et 10 µs, de préférence encore entre 10 fs et 100 ps.
